# EUROPEAN PATENT SPECIFICATION

(11) **EP 1 429 630 B1**
(45) Date of publication and mention of the grant of the patent: **13.04.2016**
(21) Application number: 02760890.0
(22) Date of filing: 19.09.2002
(51) Int. Cl.: A23L 2/02, A23L 2/52, A23L 7/10, A23L 29/30, A23L 33/10, A23L 33/16

(54) **PROCESS FOR THE FORTIFICATION OF A FRUIT BASED FOOD PRODUCT WITH CALCIUM**
VERFAHREN ZUR ANREICHUNG VON FRUCHTPRODUKTEN MIT CALCIUM
PROCEDE VISANT A ENRICHIR EN CALCIUM UN PRODUIT ALIMENTAIRE A BASE DE FRUITS

(30) Priority: 21.09.2001 EP 01203615; 21.09.2001 US 956856
(43) Date of publication of application: 23.06.2004
(73) Proprietor: Purac Biochem B.V., 4200 AA Gorinchem (NL)
(72) Inventor: BOUWMAN, Simone, Johanna, NL-4286 EA Almkerk (NL); BONTENBAL, Elize, Willem, NL-6701 CE Wageningen (NL)
(74) Representative: Beetz, Tom
(86) International application number: PCT/NL2002/000597
(87) International publication number: WO 2003/024250

(56) References cited:
- WO-A-01/01799
- WO-A-97/30601
- US-A- 4 740 380
- US-A- 4 871 554
- US-A- 4 919 963
- US-A- 6 086 927

## Description

The present invention relates to a process for the fortification of food products containing fruit such as fruit juices, concentrates, syrups or spreads with calcium.

Such processes are known from the prior art. In WO 00/28838 a calcium fortified juice based nutritional beverage is described containing de-pectinized fruit juice and a source of calcium selected from natural milk mineral, calcium lactate gluconate or mixtures thereof. The beverage can further contain nutrients such as vitamins. In EP 397 232 also a nutritional beverage containing fruit juice is described wherein as a calcium source calcium chloride, calcium carbonate or calcium-citrate-malate is used.

US 6,086,927 describes a process for preparing a calcium enriched food product by the sequential mixing in water or fruit juice of calcium hydroxide, a phosphorus based acid, calcium lactate and calcium phosphate. The mixture comprises about 40 wt. % of total calcium derived from calcium hydroxide, about 15 wt. % of total calcium derived from calcium lactate and about 45 wt. % of total calcium derived from calcium phosphate.

US 4,740,380 relates to calcium fortified acid beverages, but these only contain fruit flavors, in particular lemon/lime flavors.

US 4,871,554 relates to fruit drinks fortified with tribasic calcium phosphate and calcium lactate.

WO97/30606 relates to fruit drinks to which a calcium salt is added, but not from a combination of calcium chloride and calcium lactate.

WO01/01799 discloses an isotonic fruit drink containing a source of calcium. It does not disclose a combination of calcium chloride and calcium lactate.

US 4,919,963 relates to a calcium fortified fruit juice wherein calcium is added from a source selected from an inorganic salt (calcium carbonate) or an inorganic base (calcium hydroxide or calcium oxide).

The problem which arises when calcium compounds are added to fruit based food products is that colour changes can occur, in particular in case of juices or concentrates obtained from fruit containing pH sensitive colour pigments such as for instance anthocyanins.

Anthocyanins are stable at low pH. At higher pH a discoloration from red or blue to brown occurs. This is undesirable. Besides colour stability, it is required that the fortified products have a stable and acceptable flavour.

The object of the invention is to provide a process for the fortification of food products containing fruit with calcium such that the colour and preferably also the flavour of the food product is acceptable and remains stable over a longer period of time.

The invention thus provides a process, as defined in claim 1 appended hereto, for fortifying food products containing fruit with calcium, comprising adding to the food product calcium chloride and calcium lactate. Particularly, from 20 to 80 wt. % of the total calcium added is supplied by calcium chloride and from 20 to 80 wt.% of total calcium added is supplied by calcium lactate. Preferably at least 50 wt. % of total calcium added is supplied by the calcium lactate. It was found that when at least 20 wt. % of the total calcium is supplied by calcium lactate a good taste of the food product may be ensured.

The calcium lactate can also be obtained by *in situ* formation by addition of lactic acid or a potassium, sodium and/or ammonium salt thereof and calcium hydroxide, calcium hydrate and/or calcium carbonate to the food product.

As defined in claim 5 appended hereto, calcium chloride can also be obtained by *in situ* formation, by addition of calcium hydroxide, calcium hydrate and/or calcium carbonate in combination with hydrochloric acid.

As recited in claim 1 appended hereto, at least 20 wt. % of total calcium added is supplied by calcium chloride. It was found that when at least 20 wt. % of the total calcium is supplied by calcium chloride a good colour stability of the food product may be ensured.

The invention also relates to the calcium enriched food product, as defined in claim 10 appended hereto, said product being obtained with the process described above and which contains added calcium chloride and added calcium lactate. Preferably the product contains 50 to 80 wt. % of total added calcium of calcium lactate and 20 to 50 wt. % of total added calcium of calcium chloride. With added calcium is meant the calcium which is not naturally present in one of the raw materials of the food product. This means for instance that when the food product contains milk, the milk calcium already present in the milk is not included in the balance of total added calcium.

The food product containing fruit of the invention includes not only juices, but also fruit concentrates, fruit based beverages, nectars, syrups etc. containing fruit. food products can also be spreads, which includes spreadable fruit products such as jams, marmalades and fruit filings.

The process of the invention is particularly suitable for food products based on fruit containing anthocyanins, such as blueberries, bilberries, cranberries, elderberries, strawberries, raspberries, blackberries) blackcurrants, red, black and blue grapes, plums and cherries.

The product obtained after fortification with calcium has a pH lower than 4.5, preferably lower than 3.5, in particular between 2.5 and 3.5.

The calcium concentration in the final product after fortification is determined by the recommended values for daily food intake, but is in particular less than 3000 ppm, preferably less than 600 ppm. A suitable calcium concentration in the juice or spread is 400 to 900 ppm.

### EXAMPLES

### Example 1 (not within invention)

Orange juice and apple juice were fortified with 1200 ppm calcium. Calcium phosphate and calcium lactate were added in various ratios. After 5 days at 40 °C the colour, pH and taste were analysed. The results are compiled in TABLES 2 and 3.

**TABLE 2 Orange juice fortified with calcium lactate/calcium phosphate**

| **Ratio % Calcium from lactate/ phosphate** | **pH** | **Colour stability** | **taste** |
|---|---|---|---|
| blank | 3.73 | good | good |
| 100:0 | 3.84 | good | good |
| 75:25 | 3.78 | good | good |
| 50:50 | 3.71 | Good | good |
| 25:75 | 3.63 | Good | good |
| 0:100 | 3.53 | Good | bitter |

**TABLE 3 Apple juice fortified with calcium lactate/calcium phosphate**

| **Ratio % Calcium from lactate/ phosphate** | **pH** | **Colour stability** | **taste** |
|---|---|---|---|
| blank | 3.50 | good | good |
| 100:0 | 3.86 | good | good |
| 75:25 | 3.78 | good | good |
| 50:50* | 3.69 | good | good |
| 25:75* | 3.58 | good | good |
| 0:100* | 3.44 | good | bitter |

| | | | |
|---|---|---|---|
| *) a precipitation was present | | | |

Table 2 and 3 show that when more than 75 wt% of the calcium originates from calcium phosphate, the taste is detrimentally affected. Thus with at least 20 wt.% of the calcium added originating from calcium lactate ensures a good taste. The same tests were performed with calcium lactate/calcium citrate blends with the same results.

### Example 2

Cranberry juice was fortified with 500 ppm. First calcium lactate was added to the juice and stirred untill all was dissolved. Thereafter calcium chloride was added. The pH was measured and the flavor was assessed. The juices were then stored at 35 °C for 40 hours to check colour stability.

In Table 1 results of this experiment are shown:

**Table 1**

| **Calcium of calcium lactate (ppm)** | **Calcium of calcium chloride (ppm)** | **pH** | **Colour stability** | **taste** |
|---|---|---|---|---|
| 0 | 0 | 2.67 | | |
| 0 | 500 | 2.53 | very light, watery | chlorine/bitter |
| 100 | 400 | 2.62 | good | chlorine/bitter |
| 200 | 300 | 2.71 | Good | chlorine/bitter |
| 300 | 200 | 2.80 | Good | good |
| 400 | 100 | 2.91 | Good | good |
| 500 | 0 | 3.00 | light/ brownish | tart/astringent |

These results show that a good colour stability is ensured with at least 20 wt.% of the calcium supplied originating from the inorganic acid calcium salt, whereas a good taste is ensured with at least 20 wt.% of the calcium originating from the organic acid calcium salt.

### Example 3 (not within invention)

Lemonade syrup (Orange form ex Karvan Cevitam) was fortified with a blend of calcium lactate/calcium chloride (dosing level 20 % RDI preserving of 250 ml. The results on pH and taste are compiled in TABLE 4.

**TABLE 3 Lemonade syrup juice fortified with calcium lactate/calcium chloride**

| **Ratio % Calcium from lactate/ chloride** | **pH** | **taste** |
|---|---|---|
| blank | 3.21 | good |
| 100:0 | 2.96 | good |
| 75:25 | 3.39 | good |
| 50:50 | 3.62 | good |
| 25:75 | 3.79 | Little chloride off flavour |
| 0:100 | 3.91 | Chlorine off flavour→ not acceptable |

These results show that also in lemonade syrups a combination of calcium lactate and an inorganic calcium salt is necessary to obtain acceptable flavour. A good taste is ensured with at least 20 wt.% of the calcium supplied by the organic acid calcium salt.

### Example 4 (not within invention)

Drink yoghurt was fortified (675ppm) with a blend of calcium lactate and mono calcium citrate. When at least 20 wt.% of the calcium supplied originated from calcium lactate a good taste was ensured.

## Claims

1. Process for fortifying a food product containing fruit with calcium, comprising adding to the food product calcium chloride and calcium lactate,
wherein 20 to 80 wt. % of total calcium added is supplied by calcium lactate and 20 to 80 wt. % of total calcium added is supplied by calcium chloride, and,
wherein the fruit in the food product is a fruit containing anthocyanins.

2. Process according to claim 1, wherein the fruit is selected from blueberries, bilberries, cranberries, elderberries, strawberries, raspberries, blackberries, blackcurrants, red, black and blue grapes, plums and cherries.

3. Process according to claim 2, wherein the fruit is cranberries.

4. Process according to claim 1, wherein calcium lactate is formed *in situ* in the food product by the addition to the food product of lactic acid or a potassium, sodium or ammonium salt thereof and calcium hydroxide, calcium hydrate or calcium carbonate.

5. Process according to claim 1, wherein calcium chloride is formed *in situ* in the food product by addition to the food product of calcium hydroxide, calcium hydrate and/or calcium carbonate and hydrochloric acid or potassium, sodium or ammonium salt thereof.

6. Process according to claim 1, wherein the food product after fortification with calcium has a pH lower than 4.5.

7. Process according to claim 6, wherein the food product after fortification with calcium has a pH lower than 3.5.

8. Process according to claim 1, wherein the calcium concentration in the food product after fortification is less than 3000 ppm.

9. Process according to claim 8, wherein the calcium concentration in the food product after fortification is less than 600 ppm.

10. Calcium enriched food product containing fruit, containing an added calcium chloride and added calcium lactate,
wherein 20 to 80 wt. % of total calcium added is supplied by calcium lactate and 20 to 80 wt. % of total calcium added is supplied by calcium chloride, and,
wherein the fruit in the food product is a fruit containing anthocyanins.

11. Calcium enriched food product according to claim 10, containing 50 to 80 wt. % of total calcium added of calcium lactate and 20 to 50 wt. % of total calcium added of calcium chloride.

12. Calcium enriched food product according to claim 10, which is a juice, concentrate, beverage, syrup, nectar or spread.

## Patentansprüche

1. Verfahren zur Anreicherung eines Nahrungsmittels, das Früchte enthält, mit Calcium, umfassend die Zugabe von Calciumchlorid und Calciumlactat zu dem Nahrungsmittel, wobei 20 bis 80 Gew.-% des gesamten zugegebenen Calciums durch Calciumlactat und 20 bis 80 Gew.-% des gesamten zugegebenen Calciums durch Calciumchlorid geliefert werden, und
wobei die Früchte in dem Nahrungsmittel Früchte sind, die Anthocyane enthalten.

2. Verfahren nach Anspruch 1, wobei die Früchte aus Blaubeeren, Heidelbeeren, Cranberries, Holunderbeeren, Erdbeeren, Himbeeren, Brombeeren, schwarzen Johannisbeeren, roten, schwarzen und blauen Trauben, Pflaumen und Kirschen ausgewählt sind.

3. Verfahren nach Anspruch 2, wobei die Früchte Cranberries sind.

4. Verfahren nach Anspruch 1, wobei Calciumlactat durch die Zugabe von Milchsäure oder einem Kalium-, Natrium- oder Ammoniumsalz davon und Calciumhydroxid, Calciumhydrat oder Calciumcarbonat zu dem Nahrungsmittel *in situ* in dem Nahrungsmittel gebildet wird.

5. Verfahren nach Anspruch 1, wobei Calciumchlorid durch die Zugabe von Calciumhydroxid, Calciumhydrat und/oder Calciumcarbonat und Salzsäure oder Kalium-, Natrium- oder Ammoniumsalz davon zu dem Nahrungsmittel *in situ* in dem Nahrungsmittel gebildet wird.

6. Verfahren nach Anspruch 1, wobei das Nahrungsmittel nach der Anreicherung mit Calcium einen pH von weniger als 4,5 aufweist.

7. Verfahren nach Anspruch 6, wobei das Nahrungsmittel nach der Anreicherung mit Calcium einen pH von weniger als 3,5 aufweist.

8. Verfahren nach Anspruch 1, wobei die Calciumkonzentration in dem Nahrungsmittel nach der Anreicherung kleiner ist als 3000 ppm ist.

9. Verfahren nach Anspruch 8, wobei die Calciumkonzentration in dem Nahrungsmittel nach der Anreicherung kleiner ist als 600 ppm ist.

10. Calcium-angereichertes Nahrungsmittel, enthaltend Früchte, das ein zugegebenes Calciumchlorid und zugegebenes Calciumlactat enthält,
wobei 20 bis 80 Gew.-% des gesamten zugegebenen Calciums durch Calciumlactat und 20 bis 80 Gew.-% des gesamten zugegebenen Calciums durch Calciumchlorid geliefert werden, und
wobei die Früchte in dem Nahrungsmittel Früchte sind, die Anthocyane enthalten.

11. Calcium-angereichertes Nahrungsmittel nach Anspruch 10, enthaltend 50 bis 80 Gew.-% des gesamten zugegebenen Calciums, an Calciumlactat, und 20 bis 50 Gew.-% des gesamten zugegebenen Calciums, an Calciumchlorid.

12. Calcium-angereicherte Nahrungsmittel nach Anspruch 10, das ein Saft, Konzentrat, Getränk, Sirup, Nektar oder Aufstrich ist.

## Revendications

1. Procédé pour enrichir en calcium un produit alimentaire contenant un fruit, comprenant le fait d'ajouter au produit alimentaire du chlorure de calcium et du lactate de calcium,
dans lequel 20 à 80% en poids du calcium total ajouté sont fournis par le lactate de calcium et 20 à 80% en poids du calcium total ajouté sont fournis par le chlorure de calcium, et,
dans lequel le fruit dans le produit alimentaire est un fruit contenant des anthocyanines.

2. Procédé selon la revendication 1, dans lequel le fruit est choisi parmi les bleuets, les myrtilles, les canneberges, les baies de sureau, les fraises, les framboises, les mûres, les cassis, les raisins rouges, bleus et noirs, les prunes et les cerises.

3. Procédé selon la revendication 2, dans lequel le fruit représente des canneberges.

4. Procédé selon la revendication 1, dans lequel le lactate de calcium est formé *in situ* dans le produit alimentaire en ajoutant au produit alimentaire de l'acide lactique ou un sel de potassium, de sodium ou d'ammonium de celui-ci et de l'hydroxyde de calcium, de l'hydrate de calcium ou du carbonate de calcium.

5. Procédé selon la revendication 1, dans lequel le chlorure de calcium est formé *in situ* dans le produit alimentaire en ajoutant au produit alimentaire de l'hydroxyde de calcium, de l'hydrate de calcium et/ou du carbonate de calcium et de l'acide chlorhydrique ou un sel de potassium, de sodium ou d'ammonium de celui-ci.

6. Procédé selon la revendication 1, dans lequel le produit alimentaire après l'enrichissement en calcium a un pH inférieur à 4,5.

7. Procédé selon la revendication 6, dans lequel le produit alimentaire après l'enrichissement en calcium a un pH inférieur à 3,5.

8. Procédé selon la revendication 1, dans lequel la concentration de calcium dans le produit alimentaire après l'enrichissement est inférieure à 3000 ppm.

9. Procédé selon la revendication 8, dans lequel la concentration de calcium dans le produit alimentaire après l'enrichissement est inférieure à 600 ppm.

10. Produit alimentaire enrichi en calcium contenant un fruit, contenant du chlorure de calcium ajouté et du lactate de calcium ajouté,
dans lequel 20 à 80% en poids du calcium total ajouté sont fournis par le lactate de calcium et 20 à 80% en poids du calcium total ajouté sont fournis par le chlorure de calcium, et,
dans lequel le fruit dans le produit alimentaire est un fruit contenant des anthocyanines.

11. Produit alimentaire enrichi en calcium selon la revendication 10, contenant 50 à 80% en poids du calcium total ajouté de lactate de calcium et 20 à 50% en poids du calcium total ajouté de chlorure de calcium.

12. Produit alimentaire enrichi de calcium selon la revendication 10, qui est un jus, un concentré, une boisson, un sirop, un nectar ou une pâte à tartiner.
